# EUROPÄISCHE PATENTSCHRIFT

(11) **EP 0 777 072 B1**
(45) Veröffentlichungstag und Bekanntmachung des Hinweises auf die Patenterteilung: **15.12.1999**
(21) Anmeldenummer: 96113124.0
(22) Anmeldetag: 16.08.1996
(51) Int. Cl.: F16J 1/14

(54) **Kolben-Pleuelverbindung**
Piston-rod connection
Liaison piston-bielle

(30) Priorität: 29.11.1995 DE 19544418
(43) Veröffentlichungstag der Anmeldung: 04.06.1997
(73) Patentinhaber: Federal-Mogul Burscheid GmbH, 51399 Burscheid (DE)
(72) Erfinder: Junge, Klaus, Prof., 51399 Burscheid (DE)

(56) Entgegenhaltungen:
- DE-A- 4 337 473

## Beschreibung

Die Erfindung betrifft eine Kolben-Pleuelverbindung, insbesondere für Brennkraftmaschinen, wobei am Pleuelkopf ein fest mit dem Pleuel verbundener, einseitig auskragender Zapfen angeordnet ist, der in einer am Kolbenboden als Lagerstelle ausgebildeten Bohrung gehalten ist.

Aus dem Stand der Technik sind zahlreiche Konstruktionen zu entnehmen, bei denen der Kolben im Kolbenhemd zwei Kolbenaugen aufweist, durch die sich ein Kolbenbolzen erstreckt, wobei der Kolbenbolzen das Pleuelauge des Pleuels durchsetzt. Die Gaskräfte werden hierdurch nicht unmittelbar auf das Pleuel, sondern über den Kolbenbolzen übertragen.

Um die Montage der Enzelteile zu erleichtern ist es bereits bekannt, die Anzahl der Einzelteile zu reduzieren. So wurde nach der gattungsbildenden DE 4 337 473 A bereits vorgeschlagen, am Pleuelkopf einen auskragenden Zapfen anzuordnen, um so auf den Kolbenbolzen verzichten zu können. Der Vorteil dieser Konstruktion ist darin zu sehen, daß auf Bohrungen im Kolbenhemd verzichtet werden können, und daß die Kolben-Pleuelverbindung radial hinter einer Kolbenringnut angeordnet werden kann, wodurch sich die Bauhöhe des Kolbens verringern läßt und damit eine Gewichtsreduzierung erzeugt wird.

Besonders bei Motoren mit hohen Zünddrücken und hohen Drehzahlen treten bei der vorgenannten Konstruktion unerwünschte unsymmetrische Belastungsfälle auf, die zu hohen Spannungen im Pleuel und Kolben führen. Ferner führt die Anbindung des Pleuels direkt am Kolbenboden zu sehr hohen, ebenfalls unerwünschten Öltemperaturen.

Der Erfindung liegt die Aufgabe zugrunde, eine gattungsgemäße Kolben-Pleuelverbindung dahingehend zu verbessern, daß ein Einsatz in Hochleistungsmotoren möglich ist, ohne daß zusätzliche Einzelteile notwendig sind.

Diese Aufgabe wird erfindungsgemäß dadurch gelöst, daß das Pleuel am den Zapfen gegenüberliegenden Endbereich eine zum Zapfen radial in Richtung Kolbenboden versetzt angeordnete Zuglasche aufweist, die mit der Lagerstelle zusammenwirkt, so daß die in Betrieb auftretende Lasteinleitung durch Zapfen und Zuglasche gleichmäßig verteilt ist. Auf diese Weise ist eine einfache Steckverbindung geschaffen, bei der die auftretenden Kräfte vom Zapfen und von der Lasche des Pleuels aufgenommen werden, zusätzliche Verbindungselemente sind nicht notwendig. Vorteilhafte Ausgestaltungen der Erfindung sind in den Unteransprüchen dokumentiert.

Die Erfindung ist in der Zeichnung anhand eines Ausführungsbeispieles dargestellt und wird im folgenden näher erläutert. Es zeigen:
- Figur 1: einen Längsschnitt durch einen erfindungsgemäßen Kolben
- Figur 2: Teilansicht auf ein erfindungsgemäßes Pleuel
- Figur 3: Ansicht gemäß Schnittlinie III - III
- Figur 4: Kolben gemäß Figur 1 mit eingebautem Pleuel
- Figur 5: Ansicht gemäß Schnittlinie V - V

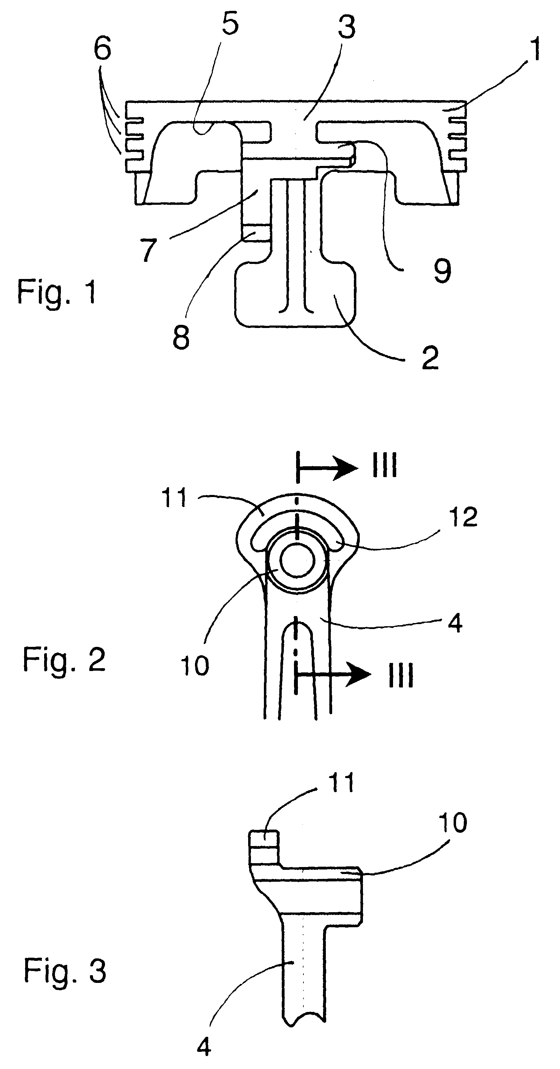

Die Figur 1 zeigt einen erfindungsgemäßen Kolben im Längsschnitt Der Kolben (1) ist einteilig ausgeführt und weist einen Kolbenschaft (2) auf, der aus lediglich zwei Segmenten besteht. Die Lagerstelle (3) zur Befestigung des Pleuels (4) (Figur 2) ist am Kolbenboden (5) angeordnet Die Lagerstelle ist in einem Guß zusammen mit dem Kolben (1) erzeugt. Aufgrund des reduzierten Kolbenschaftes (2) und der räumlichen Anordnung der Lagerstelle (3), nämlich radial hinter den Kolbenringnuten (6), ist ein axial kurz bauender Kolben geschaffen, der aus Sphäroguß, Aluminium und anderen Werkstoffen gebildet ist und somit für den Einsatz im oberen Leistungsbereich geeignet ist. Die Lagerstelle (3) ist mit einer Bohrung (7) versehen. Auf einer Seite der Lagerstelle (3) ist eine zylindrische Mantelfläche (8) und auf der anderen Seite eine halbzylindrische Mantelfläche (9) vorgesehen. Das in der Figur 2 dargestellte Pleuel (4) weist einen Zapfen (10) auf, der mit der Bohrung (7) der Lagerstelle (3) korrespondiert. Am den Zapfen gegenüberliegenden Endbereich des Zapfens (10) erstreckt sich radial nach außen eine Zuglasche (11). Die Figur 3 zeigt einen Querschnitt gemäß Schnittlinie III - III. Der Zapfen (10) ist als Hohlzylinder ausgebildet. Die Zuglasche (11) ist mit einer etwa halbkreisförmigen Ausnehmung (12) versehen.

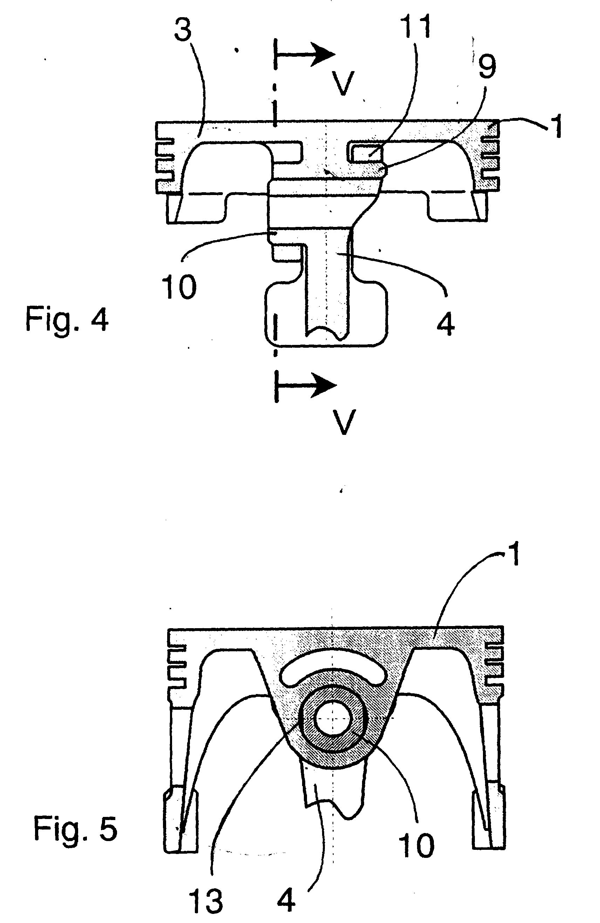

Zum Einbau des Pleuels (4) wird dieses axial in den Kolben (1) eingeführt, derart, daß der Zapfen (10) zunächst radial neben der Bohrung (7) und die Zuglasche (11) radial neben der halbzylindrischen Mantelfläche (9) der Lagerstelle (3) liegt, um anschließend durch radiales Verschieben des Pleuels (4) mit der Lagerstelle (3) in Kontakt zu treten. Der Zapfen (10) taucht in die Bohrung (7) ein und die Zuglasche (11) greift mit der Ausnehmung (12) über die Mantelfläche (9) (Figur 4).

Aus der Figur 5 ist zu erkennen, daß der Zapfen (10) Abflachungen (13) aufweist, um eine bessere Schmierung in der Lagerstelle zu gewährleisten. Die in Betrieb auftretende Last wird über den Außenumfang der halbzylindrischen Mantelfäche (9) und über den Innenumfang der Bohrung (7) eingeleitet und verteilt sich gleichmäßig auf die Lagerstelle (3).

## Patentansprüche

1. Kolben-Pleuelverbindung, insbesondere für Brennkraftmaschinen, wobei am Pleuelkopf ein fest mit dem Pleuel verbundener, einseitig auskragender Zapfen angeordnet ist, der in einer am Kolbenboden als Lagerstelle ausgebildeten Bohrung gehalten ist, dadurch gekennzeichnet, daß das Pleuel (4) an dem Zapfen (10) gegenüberliegenden Endbereich eine zum Zapfen (10) radial in Richtung Kolbenboden (5) versetzt angeordnete Zuglasche (11) aufweist, die mit der Lagerstelle (3) zusammenwirkt, so daß die in Betrieb auftretende Lasteinleitung durch Zapfen (10) und Zuglasche (11) gleichmäßig verteilt ist.

2. Kolben-Pleuelverbindung nach Anspruch 1, dadurch gekennzeichnet, daß die Lagerstelle (3) einen Bereich mit etwa halbzylindrischer Mantelfläche (9) aufweist, auf die die Zuglasche (11) aufschiebbar ist.

3. Kolben-Pleuelverbindung nach Anspruch 1 und 2, dadurch gekennzeichnet, daß die Zuglasche (11) einstückig mit dem Pleuel (4) verbunden ist.

4. Kolben-Pleuelverbindung nach den Ansprüchen 1 bis 3, dadurch gekennzeichnet, daß die Zuglasche (11) eine etwa halbkreisförmige Ausnehmung (12) aufweist.

5. Kolben-Pleuelverbindung nach den Ansprüchen 1 bis 4, dadurch gekennzeichnet, daß der Zapfen (10) als Hohlzylinder ausgebildet ist.

6. Kolben-Pleuelverbindung nach den Ansprüchen 1 bis 5, dadurch gekennzeichnet, daß der Hohlzylinder Abflachungen (13) an seiner Mantelfläche aufweist.

## Claims

1. Piston to piston rod connection, especially for internal combustion engines, wherein a pin fixed on the piston rod, projecting to one side, is arranged on the piston rod head and is held in a bore formed on the piston crown as a bearing, characterized in that the piston rod (4) has a draw lug (11) arranged on the end region opposite the pin (10), radially offset in the direction of the piston crown relative to the pin (10) and so cooperating with the bearing (3) that the introduction of the load arising in operation is uniformly distributed through the pin (10) and the draw lug (11).

2. Piston to piston rod connection according to claim 1, characterized in that the bearing (3) comprises a region with an approximately semi-cylindrical peripheral surface (9), on which the draw lug (11) can slide.

3. Piston to piston rod connection according to claim 1 and 2, characterized in that the draw lug (11) is connected to the piston rod (4) in one piece.

4. Piston to piston rod connection according to claims 1 to 3, characterized in that the draw lug (11) has an approximately semicircular recess (12).

5. Piston to piston rod connection according to claims 1 to 4, characterized in that the pin (10) is in the form of a hollow cylinder.

6. Piston to piston rod connection according to claims 1 to 5, characterized in that the hollow cylinder has flats (13) on its peripheral surface.

## Revendications

1. Liaison piston-bielle, en particulier pour machine à combustion interne, dans laquelle au niveau de la tête de bielle est prévu un tourillon relié fixement à la bielle et faisant saillie vers l'extérieur sur un côté, ledit tourillon étant maintenu dans un alésage réalisé sous la forme d'un point d'appui au niveau du fond du piston, caractérisée en ce que la bielle (4) comprend dans la zone d'extrémité opposée au tourillon (10) un collier de traction (11) décalé par rapport au tourillon (10) radialement en direction du fond de piston (5), ledit collier de traction (11) coopérant avec le point d'appui (3) de telle sorte qu'une application de force apparaissant lors du fonctionnement est répartie uniformément sur le tourillon (10) et le collier de traction (11).

2. Liaison piston-bielle selon la revendication 1, caractérisée en ce que le point d'appui (3) présente une zone avec une surface d'enveloppe (9) environ semi-cylindrique, qui est déplaçable sur le collier de traction (11).

3. Liaison piston-bielle selon les revendications 1 et 2, caractérisée en ce que le collier de traction (11) est relié de manière monobloc à la bielle (4).

4. Liaison piston-bielle selon les revendications 1 à 3, caractérisée en ce que le collier de traction (11) comprend un évidement (12) environ semi-circulaire.

5. Liaison piston-bielle selon les revendications 1 à 4, caractérisée en ce que le tourillon (10) est réalisé sous la forme d'un cylindre creux.

6. Liaison piston-bielle selon les revendications 1 à 5, caractérisée en ce que le cylindre creux comprend des méplats (13) au niveau de sa surface d'enveloppe.
